# EUROPÄISCHE PATENTSCHRIFT

(11) **EP 2 831 295 B1**
(45) Veröffentlichungstag und Bekanntmachung des Hinweises auf die Patenterteilung: **02.05.2018**
(21) Anmeldenummer: 13717418.1
(22) Anmeldetag: 27.02.2013
(51) Int. Cl.: C23C 2/06, C23C 2/12, C21D 1/26, C21D 1/42, C21D 1/673, C23F 17/00, C21D 9/48, C21D 9/46, C21D 8/02

(54) **VERFAHREN ZUR HERSTELLUNG EINES BAUTEILS AUS STAHL DURCH WARMUMFORMEN**
METHOD FOR PRODUCING A COMPONENT FROM STEEL BY HOT FORMING
PROCÉDÉ POUR FABRIQUER UN ÉLÉMENT EN ACIER PAR DÉFORMATION À CHAUD

(30) Priorität: 30.03.2012 DE 102012006941
(43) Veröffentlichungstag der Anmeldung: 04.02.2015
(73) Patentinhaber: Salzgitter Flachstahl GmbH, 38239 Salzgitter (DE)
(72) Erfinder: LUTHER, Friedrich, 30173 Hannover (DE); EVERTZ, Thomas, 31228 Peine (DE); MÜTZE, Stefan, 30655 Hannover (DE); BRAUN, Michael, 38165 Lehre (DE)
(74) Vertreter: Meissner, Peter E.
(86) Internationale Anmeldenummer: PCT/DE2013/000126
(87) Internationale Veröffentlichungsnummer: WO 2013/143519

(56) Entgegenhaltungen:
- WO-A1-2013/010524
- DE-A1-102009 016 027
- DE-A1-102009 025 821
- ThyssenKrupp Stahl: "Umformverhalten höher- und höchstfester Mehrphasenstähle", , 31. August 1999 (1999-08-31), Seiten 1-36, XP002699588, Gefunden im Internet: URL:http://www.thyssenkrupp-steel-europe.c om/servlet/it.d4cms.custom.std.download.Do wnloadServlet/005101023654UkE4K0xpTldKQkU4 Zm5wQ0VSRlBWMnRoSkVGN1ppOU5iMGdlQ0R0YkkxWm hSVk1jZWxrNlEwTUZaRVZXSVUxS1hEWmpRM0ppRVJK Q0pUSWlJekk3RHlCK0RRVVFUUThRZjNJMEJRPT0=/t kscs_umform_mps.pdf?IE55_OR_SP1_BUG=.pdf [gefunden am 2013-06-27]
- ArcelorMittal: "Dual-und Komplexphasenstähle", , 19. November 2012 (2012-11-19), Seiten 1-9, XP002699591, Gefunden im Internet: URL:http://www.arcelormittal.com/fce/satur nus/sheets/A1_DE.pdf [gefunden am 2013-06-27]

## Beschreibung

Die Erfindung betrifft ein Verfahren zur Herstellung eines Bauteils aus Stahl durch Warmumformen gemäß dem Oberbegriff des Patentanspruches 1.

Derartige Bauteile werden hauptsächlich in der Automobilindustrie verwendet, aber auch im Maschinenbau oder Bauwesen bieten sich Einsatzmöglichkeiten.

Der heiß umkämpfte Markt zwingt die Automobilhersteller ständig nach Lösungen zur Senkung ihres Flottenverbrauches unter Beibehaltung eines höchstmöglichen Komforts und Insassenschutzes zu suchen. Dabei spielt einerseits die Gewichtsersparnis aller Fahrzeugkomponenten eine entscheidende Rolle andererseits aber soll auch ein hoher passiver Insassenschutz erreicht werden, der entsprechend hohe Festigkeiten statisch/dynamisch erfordert. Im Crashfall ist darüber hinaus angestrebt Crashenergie abzubauen, dies erfordert ein duktiles Versagensverhalten.

Dieser Notwendigkeit versuchen die Vormateriallieferanten dadurch Rechnung zu tragen, dass durch die Bereitstellung hoch- und höchstfester Stähle die Wanddicken reduziert werden können bei gleichzeitig verbessertem Bauteilverhalten bei der Fertigung und im Betrieb.

Diese Stähle müssen daher vergleichsweise hohen Anforderungen hinsichtlich Festigkeit, Dehnfähigkeit, Zähigkeit, Energieaufnahme und Korrosionsbeständigkeit sowie ihrer Verarbeitbarkeit beispielsweise bei der Kaltumformung und beim Fügen genügen.

Unter den vorgenannten Aspekten gewinnt die Herstellung von Bauteilen aus warmumformbaren Stählen zunehmend an Bedeutung, da diese bei geringerem Materialaufwand die gestiegenen Anforderungen an die Bauteileigenschaften ideal erfüllen.

Die Herstellung von Bauteilen mittels Abschrecken von Vorprodukten aus presshärtbaren Stählen durch Warmumformen in einem Umformwerkzeug, ist aus der DE 601 19 826 T2 bekannt. Hier wird eine zuvor oberhalb der Austenitisierungstemperatur auf 800 - 1200°C erwärmte und ggf. mit einem metallischen Überzug aus Zink oder auf Basis von Zink versehene Blechplatine in einem fallweise gekühlten Werkzeug durch Warmumformung zu einem Bauteil umgeformt, wobei während des Umformens durch schnellen Wärmeentzug das Blech bzw. Bauteil im Umformwerkzeug eine Abschreckhärtung (Presshärtung) erfährt und durch das entstehende martensitische Härtegefüge die geforderten Festigkeitseigenschaften erreicht.

Die Herstellung von Bauteilen mittels Abschrecken von mit einer Aluminiumlegierung beschichteten Vorprodukten aus presshärtbaren Stählen durch Warmumformen in einem Umformwerkzeug, ist aus der DE 699 33 751 T2 bekannt. Hier wird ein mit einer Aluminiumlegierung beschichtetes Blech vor einem Umformen auf über 700°C erwärmt, wobei eine intermetallisch legierte Verbindung auf Basis von Eisen, Aluminium und Silizium auf der Oberfläche entsteht und nachfolgend das Blech umgeformt und mit einer Geschwindigkeit oberhalb der kritischen Härtegeschwindigkeit abgekühlt.

Der metallische Überzug wird üblicherweise im kontinuierlichen Schmelztauchverfahren auf ein Warm- oder Kaltband, z. B. durch Feuerverzinkung oder Feueraluminierung bei Temperaturen von ca. 460°C (Feuerverzinken) und ca. 680°C (Feueraluminieren) aufgebracht.

Das Aufbringen eines metallischen Überzugs auf das umzuformende Werkstück (Band, Platine) vor dem Warmumformen ist von Vorteil, weil durch den Überzug eine Verzunderung des Grundmaterials wirksam vermieden werden kann.

Anschließend wird die Platine für das Umformwerkzeug der Warmumformung passend zugeschnitten.

Bekannte warmumformbare Stähle für diesen Einsatzbereich sind z. B. der Mangan-Bor-Stahl "22MnB5" und neuerdings auch luftvergütbare Stähle gemäß einer noch nicht veröffentlichten Patentanmeldung des Anmelders.

Die Herstellung eines Bauteils durch Pressformhärten mittels des bekannten Verfahrens hat mehrere Nachteile.

Bei diesem Verfahren wird die Platine auf hohe Temperaturen oberhalb Ac3 erwärmt, so dass eine vollständige Austenitisierung des Werkstoffs stattfindet und nach dem Pressen so schnell abgekühlt, dass sich ein martensitisches Gefüge einstellt.

Zum Einen benötigt dieses Verfahren durch die Aufheizung des Vorproduktes auf Austenitisierungstemperatur sowie der Umwandlung von Ferrit in Austenit sehr viel Energie, was das Verfahren teuer macht und erhebliche Mengen CO2 produziert und damit der Forderung nach energieeffizienteren Verfahren entgegensteht.

Bei Einsatz eines Blechs mit einer vor Verzunderung schützenden Schicht werden zudem extrem hohe Anforderungen bezüglich der Temperaturstabilität an das Schichtsystem gestellt, da die Umformung bei Temperaturen oberhalb der Ac3-Temperatur in der Regel deutlich oberhalb 800°C erfolgt. Dies hat zur Folge, dass die zur Verfügung stehenden Prozessfenster im Zuge der Presshärtung erheblich kleiner sind als bei Einsatz von Material ohne einen Verzunderungsschutz. Beispielsweise dürfen bestimmte Ofenzeiten nicht überschritten werden. Darüber hinaus besteht bei der Verwendung von zinkbasierten Überzügen die Gefahr der Flüssigmetallversprödung in diesen Temperaturbereichen. Weiter erfolgt bei den hohen Einsatztemperaturen eine starke Auflegierung der metallischen Schicht mit Eisen, wodurch sich die Korrosionsschutzwirkung beim fertigen Bauteil reduziert.

Neben den beschriebenen Nachteilen ist festzustellen, dass das bekannte Verfahren energieintensiv ist, was zu hohen Komponenten-Preisen führt und CO2-intensiv ist, was die Umwelt über Gebühr belastet.

Aus der EP 1 783 234 A1 ist ein Verfahren zur Herstellung von Produkten durch Umformen bei erhöhten Temperaturen bekannt, bei dem ein verzinktes Stahlblech auf eine Verformungstemperatur von 450 °C bis 700°C erwärmt, anschließend umgeformt und ungesteuert langsam abgekühlt wird. Hierdurch soll die Entstehung übermäßiger Spannungen bei der Warmumformung vermieden werden. Allgemein wird angegeben, dass eine Verbesserung der mechanischen Eigenschaften im Vergleich zum Kaltumformen erzielt werden soll.

Aus der nicht vorveröffentlichten WO 2013/010524 A1 ist ein Verfahren zur Herstellung eines Bauteiles durch Warmumformung zu entnehmen, bei dem aus einem Warmband eine Platine zugeschnitten wird, die ein martensitisches Gefüge aufweist.
Die Platine wird auf eine Temperatur < Ac1- Umwandlungstemperatur, insbesondere zwischen 400 und 700 °C, erwärmt und umgeformt, wobei sie vor der Umformung mit einem metallischen Überzug, der Zn, Al, Mg und/oder Si enthält, versehen wird.
Die Erwärmung der Platine auf die Umformtemperatur erfolgt induktiv, konduktiv oder mittels Strahlung.

Aufgabe der Erfindung ist es, ein Verfahren zur Herstellung eines Bauteils durch Warmumformung anzugeben, welches kostengünstig ist und mit dem vergleichbare oder verbesserte Eigenschaften des umgeformten Bauteils wie beim bekannten Warmumformen durch Presshärten erreicht werden.

Nach der Lehre der Erfindung wird diese Aufgabe durch ein Verfahren zur Herstellung eines Bauteils aus umwandlungsfähigem Stahl durch Warmumformen gelöst, bei dem zunächst aus einem mit einem metallischen Überzug versehenem Band oder Blech als Vormaterial eine Platine zugeschnitten, anschließend auf Umformtemperatur erwärmt und umgeformt wird, aufweisend ein zumindest teilmartensitisches Umwandlungsgefüge nach der Umformung,
wobei anstelle einer Pressformhärtung das zumindest teilmartensitische Umwandlungsgefüge durch Austenitisieren und Abschrecken bereits vor der Umformung im Vormaterial erzeugt wird,
und zwar im Zuge eines kontinuierlichen oder diskontinuierlichen Glühverfahrens durch Erwärmung auf Austenitisierungstemperatur und anschließender Abschreckung,mit einer sich daran anschließenden Schmelztauchbeschichtung zur Aufbringung des metallischen Überzugs, wobei
anschließend die so konditionierte Platine unter Beibehaltung des zumindest teilmartensitischen Umwandlungsgefüges nach der Umformung auf eine Umformtemperatur unterhalb der Ac₁-Umwandlungstemperatur wiedererwärmt und bei dieser Temperatur umgeformt wird.

Das erfindungsgemäße Verfahren weist gegenüber dem aus der DE 601 19 826 T2 bekannten Pressformhärten zur Herstellung eines Bauteils den Vorteil auf, dass durch die Entkopplung des Umformvorganges von der Gefügeumwandlung durch Abschreckhärten ein deutlich geringerer Energiebedarf für die Erwärmung der Platine notwendig ist. Der Energieaufwand für die vorangehende Gefügeumwandlung kann dem nicht gegenüber gestellt werden, wenn die teilmartensitische Gefügeumwandlung in einem der beim Stahlhersteller notwendigen Prozesse integriert wird.
Ein weiterer großer Vorteil ist, dass bereits vorhandene Anlagen zum Pressformhärten genutzt werden können, die jedoch für das hier beschriebene Verfahren mit deutlich reduzierter Leistung betrieben werden können.

Die Bauteileigenschaften werden demzufolge zu großen Anteilen durch die Konditionierung vor der Umformung, bestimmt, die in weiten Grenzen durch die jeweilige Legierungszusammensetzung und die Wärmebehandlung des Vormaterials einstellbar sind.

Die Konditionierung des Vormaterials oder der zugeschnittenen Platine zur Erzielung eines zumindest teilmartensitischen Gefüges kann wahlweise diskontinuierlich oder kontinuierlich erfolgen, wobei je nach Erfordernis warm- oder kaltgewalztes Stahlband, zum Einsatz kommt.

Ein Vorteil gegenüber dem bekannten Pressformhärten besteht darin, dass Bleche ohne einen Verzunderungsschutz deutlich weniger stark verzundern, da die Erwärmung bei erheblich geringeren Temperaturen (<AC₁) als bei der Pressformhärtung (>AC₃) durchgeführt wird. Somit reduzieren sich die Kosten für die Nachbearbeitung verzunderter Bauteiloberflächen bzw. es erhöht sich die Standzeit der Werkzeuge, was zu Kosteneinsparungen beim Einsatz des erfindungsgemäßen Verfahrens führt.

Darüber hinaus ist ein weiterer Vorteil gegenüber dem bekannten Pressformhärten, dass als Korrosions- und Verzunderungsschutz ein herkömmlicher Zinküberzug mittels Schmelztauchen aufgebracht werden kann, der den bekannten Pressformhärteprozess aufgrund der geringen thermischen Beständigkeit nicht überstehen würde. Weiter ist der Eisengehalt des Überzugs am fertigen Bauteil geringer als bei Bauteilen mit metallischen Überzügen, die durch das bekannte Pressformhärten hergestellt wurden. Hierdurch resultiert ein deutlich verbesserter Korrosionsschutz.

Bei der Erfindung wird die Konditionierung bereits am Stahlband während einer Durchlaufglühung kontinuierlich durchgeführt, die mit einer Schmelztauchbeschichtung kombiniert wird, so dass das konditionierte Band bereits einen metallischen Überzug für die weiteren Verarbeitungsschritte aufweist.

Wahlweise ist es auch möglich, den metallischen Überzug auf die bereits zugeschnittene Platine oder das fertige Bauteil aufzubringen. Vorteilhafter ist es allerdings, den metallischen Überzug in einem kontinuierlichen Prozess bereits auf ein warm- oder kaltgewalztes Stahlband aufzubringen.

In einer vorteilhaften Weiterbildung der Erfindung folgt dem Abschreckhärten des Vormaterials oder der Platine ein Vergütungsschritt durch Anlassen bei Temperaturen von 180°C bis 680°C, bzw. vorteilhaft zwischen 250°C und 500°C und bei einer nachfolgenden Schmelztauchbeschichtung idealerweise bei Temperaturen zwischen 250 °C und der Schmelzbadtemperatur, so dass das fertige Vormaterial / die fertige Platine einen Vergütungszustand aufweist, der ideale Bedingungen für die nachfolgende Umformung bei Temperaturen <Ac₁ bietet.
Der Anlassvorgang kann entweder am Vormaterial oder an der Platine erfolgen. Soll das Vormaterial, z. B. das Stahlband, durchlaufgeglüht und anschließend schmelztauchbeschichtet werden, bietet es sich an, die Verfahrensschritte Austenitisieren, Abschrecken unter die Martensit-Starttemperatur, Wiedererwärmen bzw. Anlassen auf Schmelzbadtemperatur und Schmelztauchbeschichten innerhalb einer kontinuierlichen Schmelztauchbeschichtungsanlage durchzuführen. Es bietet sich darüber hinaus an, die Wiederwärmung des zumindest teilmartensitischen Bandes unmittelbar vor dem Zinkbad durch eine induktive Erwärmung durchzuführen..

Die Erfindung ist grundsätzlich anwendbar für Bauteile aus hoch- oder höchstfesten Stählen, z. B. mit Streckgrenzen von 280 MPa bis 1200 MPa bzw. noch höher in Abhängigkeit des gewählten Legierungskonzeptes. Als höherfeste Stähle kommen alle einphasigen aber auch mehrphasige Stahlsorten zum Einsatz. Dazu gehören mikrolegierte höherfeste Stahlsorten genauso wie bainitische oder martensitische Sorten und Dual- oder Mehrphasenstähle.

Aufgrund der vergleichsweise geringen Wärmemenge kann auf große Wiedererwärmungsaggregate, wie z. B. Tunnelöfen oder Kammeröfen, zugunsten schnell und direkt wirkender Systeme (induktiv, konduktiv und insbesondere Strahlung) verzichtet werden.

Außerdem kommt das beschriebene neue Verfahren mit erheblich weniger Wärmeenergie aus, bzw. der energetische Wirkungsgrad ist höher als beim Presshärten. Dadurch sind die Prozesskosten geringer und der CO₂ Ausstoß wird reduziert.

Bevorzugt erfolgt die Wiedererwärmung vor dem Halbwarmformen mittels Strahlung, da hier der Wirkungsgrad deutlich höher ist als bei einer Erwärmung in einem Ofen oder bei konduktiver Erwärmung und der Energieeintrag in das Material je nach Oberflächenbeschaffenheit schneller und effektiver erfolgt.

Durch den Einsatz von Strahlern ist es auch möglich, gezielt einzelne Bereiche des umzuformenden Werkstückes zu erwärmen, um belastungsoptimierte Bauteile zu erhalten.

Für den Transport zwischen Wärmequelle und Umformwerkzeug kann es außerdem sinnvoll sein, besonders bei sehr dünnen Blechen (z. B. <0,8mm) eine Profilierung der Zuschnitte zur Erhöhung der lokalen Steifigkeit vorzusehen. Dies ist beim konventionellen Presshärten nicht möglich, da die zu erzielende Festigkeit eine schroffe Abkühlung erfordert, welche sich über Leibung im Werkzeug aufgrund der Profilierung ausschließt.

Bei dem erfindungsgemäßen Verfahren wird die Platine auf eine Temperatur unterhalb Ac1, vorteilhaft unterhalb 700°C, noch vorteilhafter in einem Temperaturbereich von 400 - 700°C erwärmt und anschließend zu einem Bauteil umgeformt. Die optimale Umformtemperatur ist abhängig von der geforderten Festigkeit des Bauteils und liegt bevorzugt etwa zwischen 460°C und 700°C.

Auch ist bei diesem Verfahren vorteilhaft, dass durch die erfindungsgemäße Umformung bei Temperaturen <Ac₁ Versetzungen in das Bauteil eingebracht werden, über die eine weitere Festigkeitssteigerung eingestellt werden kann, da die Temperatur für eine vollständige Auslöschung der Versetzungen im Sinne der Rekristallisation oder Erholung bei industriell genutzten Taktzeiten von maximal 15 s je Bauteil bzw. deutlich darunter nicht ausreicht.

In Kombination mit der Behinderung von Versetzungen durch interstitiell gelöste Elemente (z. B. C, B, N) wird während des Pressvorgangs und der anschließenden Abkühlung eine weitere Festigkeitssteigerung durch den sogenannten "Bake-Hardening-Effekt" oder durch eine zusätzliche Ausscheidungsbildung, z. B. VC, ermöglicht. Alternativ kann die Festigkeitssteigerung durch eine geregelte Abkühlung oder eine spätere Wärmebehandlung (z. B. Lackeinbrennen oder Spannungsarmglühen) erfolgen.

In einer vorteilhaften Ausgestaltung der Erfindung wird bei Erwärmung des Vorproduktes auf Umformtemperatur eine lokale Überschreitung des Temperaturbereichs des Halbwarmformens in den Austenitisierungsbereich vorgenommen, um gezielt lokale Eigenschaftsänderungen vorzunehmen (z. B. lokale Härtung), die in Kombination mit der Festigkeitssteigerung des restlichen Materials den späteren Beanspruchungen des Bauteils angepasst sind.

Die wesentlichen Vorteile der Erfindung lassen sich wie folgt zusammenfassen:
- Geringer Energiebedarf beim Verarbeiter.
- Bereits industriell vorhandene Erwärm- und Umformaggregate können genutzt werden.
- Die Bauteileigenschaften sind bereits über eine Vorkonditionierung beim Stahlhersteller in weiten Grenzen beeinflussbar
- Es können Standard-Zinküberzuge als Korrosions- und Verzunderungsschutz eingesetzt werden, die einem herkömmlichen Presshärteprozess wegen der geringen thermischen Beständigkeit nicht standhalten würden.
- Der Eisengehalt des Überzugs am fertigen Bauteil ist geringer als bei Bauteilen mit metallischen Überzügen, die durch das bekannte Pressformhärten hergestellt wurden. Hierdurch resultiert ein deutlich verbesserter Korrosionsschutz.
- Bei Einsatz von verzinkten Blechen besteht wegen der geringeren Umformtemperaturen nicht die Gefahr einer Flüssigemetallversprödung.
- Bei Einsatz von unverzinkten Blechen ist die Verzunderung signifikant geringer als beim bekannten Presshärteprozess, wodurch sich die Kosten für die Nachbearbeitung verzunderter Bauteiloberflächen reduzieren und sich die Standzeit der Werkzeuge erhöht.
- Die Festigkeit kann durch ein "Bake-Hardening" während des Halbwarm-Prozesses weiter gesteigert werden.

## Patentansprüche

1. Verfahren zur Herstellung eines Bauteils aus umwandlungsfähigem Stahl durch Warmumformen, bei dem zunächst aus einem mit einem metallischen Überzug versehenem Band oder Blech als Vormaterial eine Platine zugeschnitten, anschließend auf Umformtemperatur erwärmt und umgeformt wird, aufweisend ein zumindest teilmartensitisches Umwandlungsgefüge nach der Umformung,
wobei anstelle einer Pressformhärtung das zumindest teilmartensitische Umwandlungsgefüge durch Austenitisieren und Abschrecken bereits vor der Umformung im Vormaterial erzeugt wird,
und zwar im Zuge eines kontinuierlichen Glühverfahrens durch Erwärmung auf Austenitisierungstemperatur und anschließender Abschreckung,mit einer sich daran anschließenden Schmelztauchbeschichtung zur Aufbringung des metallischen Überzugs, wobei anschließend die so konditionierte Platine unter Beibehaltung des zumindest teilmartensitischen Umwandlungsgefüges nach der Umformung auf eine Umformtemperatur unterhalb der Ac₁-Umwandlungstemperatur wiedererwärmt und bei dieser Temperatur umgeformt wird.

2. Verfahren nach Anspruch 1,
**dadurch gekennzeichnet,**
**dass** im Anschluss an den Abschreckvorgang das Vormaterial oder die zugeschnittene Platine einem Anlassvorgang unterzogen wird.

3. Verfahren nach Anspruch 2,
**dadurch gekennzeichnet,**
**dass** vor Aufbringen des Überzugs das Vormaterial oder die zugeschnittene Platine einem Anlassvorgang unterzogen wird.

4. Verfahren nach Anspruch 2,
**dadurch gekennzeichnet,**
**dass** nach Aufbringen des Überzugs das Vormaterial oder die zugeschnittene Platine einem Anlassvorgang unterzogen wird.

5. Verfahren nach Anspruch 3
**dadurch gekennzeichnet,**
**dass** der Anlassvorgang inhalb einer kontinuierlichen Schmelztauchbeschichtungsanlage erfolgt

6. Verfahren nach einem der Ansprüche 2 bis 5,
**dadurch gekennzeichnet,**
**dass** das Anlassen in einem Temperaturbereich von 180 bis 680°C erfolgt.

7. Verfahren nach Anspruch 2 bis 5,
**dadurch gekennzeichnet,**
**dass** das Anlassen in einem Temperaturbereich von 250 bis 500°C erfolgt.

8. Verfahren nach einem der Ansprüche 2 bis 7,
**dadurch gekennzeichnet,**
**dass** bei einer Schmelztauchbeschichtung die Anlasstemperatur zwischen 250°C und der Schmelzbadtemperatur liegt.

9. Verfahren nach mindestens einem der Ansprüche 1 bis 8,
**dadurch gekennzeichnet,**
**dass** die Umformung unterhalb von 700°C erfolgt.

10. Verfahren nach Anspruch 9,
**dadurch gekennzeichnet,**
**dass** die Umformung in einem Temperaturbereich von 400 - 700°C erfolgt

11. Verfahren nach Anspruch 9,
**dadurch gekennzeichnet,**
**dass** die Umformung in einem Temperaturbereich zwischen 460 und 700°C erfolgt.

12. Verfahren nach mindestens einem der Ansprüche 1 bis 11,
**dadurch gekennzeichnet,**
**dass** der metallische Überzug der Schmelztauchbeschichtung aus Zn und/oder Mg und/oder Al und/oder Si bzw. Legierungssystemen der genannten Elemente besteht.

13. Verfahren nach mindestens einem der Ansprüche 1 bis 12,
**dadurch gekennzeichnet,**
**dass** die Erwärmung der Platine für die Umformung induktiv, konduktiv oder mittels Strahlung erfolgt.

14. Verfahren nach mindestens einem der Ansprüche 1 bis 13,
**dadurch gekennzeichnet,**
**dass** als Vormaterial warm- oder kaltgewalztes Stahlband verwendet wird.

## Claims

1. A method for producing a component from transformable steel by hot forming, in which first of all as primary material a blank is cut to size from a strip or sheet provided with a metallic coating, then is heated to forming temperature and is formed, having an at least partly martensitic transformation structure after the forming, wherein instead of press hardening the at least partly martensitic transformation structure is produced in the primary material by austenitising and quenching already prior to the forming,
namely during the course of a continuous annealing method by heating to austenitising temperature and subsequent quenching, with a following hot-dip coating for applying the metallic coating, wherein then the blank thus conditioned is reheated to a forming temperature below the Act transformation temperature while maintaining the at least partly martensitic transformation structure after the forming, and is formed at this temperature.

2. A method according to Claim 1,
**characterised in that**
following the quenching operation the primary material or the blank which is cut to size is subjected to a tempering operation.

3. A method according to Claim 2,
**characterised in that**
prior to application of the coating the primary material or the blank which is cut to size is subjected to a tempering operation.

4. A method according to Claim 2,
**characterised in that**
after application of the coating the primary material or the blank which is cut to size is subjected to a tempering operation.

5. A method according to Claim 3,
**characterised in that**
the tempering operation takes place within a continuous hot-dip coating installation.

6. A method according to one of Claims 2 to 5,
**characterised in that**
the tempering takes place within a temperature range of 180 to 680°C.

7. A method according to Claims 2 to 5,
**characterised in that**
the tempering takes place within a temperature range of 250 to 500°C.

8. A method according to one of Claims 2 to 7,
**characterised in that**
in the case of hot-dip coating the tempering temperature lies between 250°C and the melting-bath temperature.

9. A method according to at least one of Claims 1 to 8,
**characterised in that**
the forming takes place below 700°C.

10. A method according to Claim 9,
**characterised in that**
the forming takes place within a temperature range of 400 - 700°C.

11. A method according to Claim 9,
**characterised in that**
the forming takes place within a temperature range of between 460 and 700°C.

12. A method according to at least one of Claims 1 to 11,
**characterised in that**
the metallic coating of the hot-dip coating consists of Zn and/or Mg and/or Al and/or Si or alloy systems of the aforesaid elements.

13. A method according to at least one of Claims 1 to 12,
**characterised in that**
the heating of the blank for the forming takes place inductively, conductively or by means of radiation.

14. A method according to at least one of Claims 1 to 13,
**characterised in that**
hot-rolled or cold-rolled steel strip is used as primary material.

## Revendications

1. Procédé servant à fabriquer un composant à partir d'un acier transformable par une mise en forme à chaud, dans lequel une platine est dans un premier temps découpée, puis chauffée à une température de mise en forme et mise en forme en tant que matériau de départ à partir d'une bande ou d'une tôle pourvue d'un revêtement métallique, présentant une structure de transformation au moins en partie martensitique après la mise en forme,
dans lequel l'au moins une structure de transformation au moins en partie martensitique est produite par austénitisation et refroidissement déjà avant la mise en forme dans le matériau de départ en lieu et place d'un durcissement dans un moule,
et ce dans le cadre d'un procédé de recuit continu par réchauffement à une température d'austénitisation puis par refroidissement, avec une enduction par immersion dans un bain de matière en fusion consécutive servant à appliquer le revêtement métallique, dans lequel par la suite la platine ainsi conditionnée est à nouveau réchauffée à une température de mise en forme inférieure à la température de transformation de Ac₁ après la mise en forme en conservant la structure de transformation au moins en partie martensitique et est mise en forme à cette température.

2. Procédé selon la revendication 1,
**caractérisé en ce**
**qu'**immédiatement après l'opération de refroidissement, le matériau de départ ou la platine découpée est soumis/soumise à une opération de revenu.

3. Procédé selon la revendication 2,
**caractérisé en ce**
**qu'**avant l'application du revêtement, le matériau de départ ou la platine découpée est soumis/soumise à une opération de revenu.

4. Procédé selon la revendication 2,
**caractérisé en ce**
**qu'**après l'application du revêtement, le matériau de départ ou la platine découpée est soumis/soumise à une opération de revenu.

5. Procédé selon la revendication 3,
**caractérisé en ce**
**que** l'opération de revenu est effectuée à l'intérieur d'une installation d'enduction par immersion dans un bain de matière en fusion continue.

6. Procédé selon l'une quelconque des revendications 2 à 5,
**caractérisé en ce**
**que** le revenu est effectué dans une plage de températures allant de 180 à 680 °C.

7. Procédé selon la revendication 2 à 5,
**caractérisé en ce**
**que** le revenu est effectué dans une plage de températures allant de 250 à 500 °C.

8. Procédé selon l'une quelconque des revendications 2 à 7,
**caractérisé en ce**
**que** la température de revenu est comprise entre 250 °C et la température de bain de matière en fusion dans le cas d'une enduction par immersion dans un bain de matière en fusion.

9. Procédé selon au moins l'une quelconque des revendications 1 à 8,
**caractérisé en ce**
**que** la mise en forme est effectuée à une température inférieure à 700 °C.

10. Procédé selon la revendication 9,
**caractérisé en ce**
**que** la mise en forme est effectuée dans une plage de températures de 400 - 700 °C.

11. Procédé selon la revendication 9,
**caractérisé en ce**
**que** la mise en forme est effectuée dans une plage de températures comprises entre 460 et 700 °C.

12. Procédé selon au moins l'une quelconque des revendications 1 à 11,
**caractérisé en ce**
**que** le revêtement métallique de l'enduction par immersion dans un bain de matière en fusion est constitué de Zn et/ou de Mg et/ou de Al et/ou de Si ou de systèmes d'alliage des éléments mentionnés.

13. Procédé selon au moins l'une quelconque des revendications 1 à 12,
**caractérisé en ce**
**que** le réchauffement de la platine est effectué pour la mise en forme par induction, conduction ou au moyen d'un rayonnement.

14. Procédé selon au moins l'une quelconque des revendications 1 à 13,
**caractérisé en ce**
**qu'**une bande d'acier laminé à chaud ou à froid est utilisée en tant que matériau de départ.
